(19) Europäisches Patentamt
European Patent Office
Office européen des brevets

(11) **EP 2 085 256 B1**

(12) **FASCICULE DE BREVET EUROPEEN**

(45) Date de publication et mention
de la délivrance du brevet:
**04.04.2012  Bulletin 2012/14**

(51) Int Cl.:
***B60C 23/06*** *(2006.01)*

(21) Numéro de dépôt: **09305097.9**

(22) Date de dépôt: **02.02.2009**

(54) **Procédé et système de diagnostic de l'état de gonflage d'au moins un pneumatique d'un véhicule automobile**

Verfahren und System zur Feststellung des Füllzustands mindestens eines Reifens eines Kraftfahrzeugs

Method and system for diagnosing the state of inflation of at least one automobile tyre

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **31.01.2008  FR 0850621**

(43) Date de publication de la demande:
**05.08.2009  Bulletin 2009/32**

(73) Titulaire: **Renault s.a.s.**
**92100 Boulogne-Billancourt (FR)**

(72) Inventeurs:
• **Pothin, Richard**
**78760, JOUARS-PONCHARTRAIN (FR)**
• **De-Rinaldis, Alessandro**
**75018, PARIS (FR)**

(56) Documents cités:
**EP-A- 0 466 535      DE-A1- 19 802 498**
**US-B1- 6 817 236**

**Description**

**DOMAINE DE L'INVENTION**

L'invention a trait au domaine du diagnostic de l'état de gonflage de pneumatique équipant des roues d'un véhicule automobile.

Plus particulièrement, l'invention concerne une détection indirecte de l'état de gonflage des pneumatiques et la localisation de pneumatique défectueux à l'aide de la mesure de la vitesse angulaire des roues du véhicule et de l'analyse de ces mesures.

**ETAT ANTERIEUR DE LA TECHNIQUE**

Un état de gonflage défaillant d'un pneumatique équipant une roue d'un véhicule automobile, à savoir un sous-gonflage de ce pneumatique, représente un danger.

Par sous-gonflage, on entend ici une baisse de pression du pneumatique par rapport à une pression normale de celui-ci. Ainsi, dans la présente invention, une crevaison est assimilée à un sous-gonflage.

Par exemple, un état de gonflage défaillant d'un pneumatique peut provoquer l'éclatement de celui-ci, dans certaines conditions de conduite. Un tel éclatement met gravement en danger la sécurité des personnes embarquées dans le véhicule.

Même en l'absence d'éclatement, un sous-gonflage présente l'inconvénient d'accroître la consommation de carburant du véhicule et la rapidité d'usure du pneumatique. Pour toutes ces raisons on a proposé d'installer dans les véhicules automobiles de moyens de surveillance automatique, continue ou périodique, de la pression régnant dans les pneumatiques équipant ces véhicules. Une première solution consiste, de manière évidente, à installer, sur chaque pneumatique, un capteur de pression et, éventuellement, un capteur de température pour transmettre des signaux à des moyens de calcul prenant en compte divers phénomènes dynamiques susceptibles d'affecter eux aussi, de manière transitoire par exemple, la pression dans les pneumatiques.

Ces moyens de surveillance de la pression des pneumatiques n'ont pas connu le succès escompté du fait du coût de l'installation de capteurs et de la complexité des moyens de transmission des signaux captés, qui doivent supporter l'environnement difficile d'un véhicule automobile, affecté de vibrations, de parasitage, de variations de température, de projections d'eau, de boue, etc.

On a aussi pensé à baser la détection du sous-gonflage d'un pneumatique sur l'observation des vitesses angulaires des roues du véhicule. Si, par hypothèse, l'un des pneumatiques d'un véhicule est sous-gonflé, le rayon de roulement de ce pneumatique diminue. Cependant, la vitesse linéaire V au sol du pneumatique restant égale à celle des autres pneumatiques normalement gonflés, on conçoit que la vitesse angulaire $\omega$ de la roue de rayon de roulement R, (V=R$\omega$), portant le pneumatique sous-gonflé va s'accroître par rapport aux vitesses angulaires des autres roues, quand R diminue du fait du sous-gonflage. Le document DE 19802498 A1 décrit un tel système, en accord avec les preambules des revendications 1 et 15.

On décrit dans la demande de brevet français No. 2 568 519 un dispositif avertisseur de sous-gonflage d'un pneumatique qui fait application de cette observation. On décrit aussi dans la demande de brevet européen No. 291 217 un procédé de détection de sous-gonflage, de la même famille. Dans les deux cas on dispose sur chacune des quatre roues d'un véhicule automobile, de tourisme par exemple, un capteur de vitesse angulaire qui délivre un signal à des moyens de traitement de signaux propres à mettre en évidence la variation de vitesse angulaire mentionnée plus haut, de manière à commander sélectivement une alarme visuelle ou sonore, par exemple.

On notera qu'une telle solution est attrayante en ce qu'elle permet d'utiliser des capteurs de vitesse de bonne fiabilité, déjà largement utilisés dans les véhicules équipés de dispositifs d'antiblocage de roues, tels que les capteurs à réluctance magnétique variable. Dans un véhicule déjà équipé d'un tel dispositif la solution est en outre particulièrement économique car elle ne demande alors, pour être mise en oeuvre, que des moyens logiciels supplémentaires implantés dans le calculateur du dispositif d'antiblocage, et les moyens d'alarme mentionnés plus haut.

Par contre cette solution oblige à surmonter une difficulté majeure, qui tient au fait que la variation du rayon de roulement (et donc de la vitesse angulaire) induite par un sous-gonflage d'un pneumatique (à carcasse radiale par exemple) est inférieure d'un ordre de grandeur aux variations normalement induites par certains phénomènes de la dynamique du véhicule, sur ces pneumatiques.

De tels transferts résultent par exemple du freinage ou de l'accélération du véhicule, du braquage des roues, d'une circulation du véhicule sur une route en pente montante ou descendante, bombée ou en virage, etc.

On a pu ainsi mesurer que la variation relative de vitesse angulaire due à un sous-gonflage de 0,2 bar par rapport à la pression de gonflage normale est de l'ordre de 0,1 % alors que la variation relative due, par exemple, au passage du véhicule dans un virage d'un rayon de courbure de 30 mètres, même à faible vitesse, est de 5 % environ.

Pour tenter d'éliminer l'influence de ces phénomènes qui pourraient autrement masquer le sous-gonflage à détecter et provoquer des déclenchements erratiques des alarmes prévues, on propose dans la demande de brevet français précitée d'utiliser un effet de moyenne, sur une distance prédéterminée, par exemple de 20 km.

Dans la demande de brevet européen précitée, on propose de supprimer toute indication quant à l'occurrence éventuelle du sous-gonflage d'un pneumatique quand l'accélération latérale ou axiale du véhicule dépasse des seuils prédéterminés. Ces solutions empêchent le conducteur du véhicule de disposer d'une alarme fiable à tout instant, ce qui est particulièrement gênant en cas de dégonflage par crevaison.

Par ailleurs le procédé de détection mis en oeuvre aussi bien dans l'une que dans l'autre des demandes précitées est essentiellement basé sur l'observation de la différence des vitesses angulaires moyennes des roues situées sur les deux diagonales du quadrilatère de sustentation du véhicule, respectivement.

Or, en virage, la somme des distances parcourues par des roues diagonalement opposées n'est qu'approximativement égale à celle des roues de l'autre diagonale Cette approximation rejaillit défavorablement sur la précision des indications que l'on peut recueillir par ce procédé de détection alors même que ces indications doivent révéler un phénomène dont l'amplitude est d'un ordre de grandeur inférieure à celles d'autres phénomènes qui le masquent, comme on l'a vu plus haut.

Pour tenter de pallier aux limitations inhérentes aux systèmes de ces deux demandes, il a été proposé dans la demande de brevet français FR 2 664 536 d'utiliser une fonction linéaire des différences des puissances quadratiques des vitesses angulaires des roues de manière à s'affranchir d'erreurs dues aux valeurs non quadratiques de vitesse angulaire exploitées dans les techniques antérieures, et ainsi amoindrir l'effet de certains phénomènes dynamiques faisant varier le rayon de roulement des roues dans la détection du sous-gonflage.

Plus particulièrement, il a été proposé dans la demande FR 2 664 536 d'utiliser deux critères $CR_1^*$ et $CR_2^*$ selon les relations :

$$CR_1^* = k_1^* \frac{\left(E_1\left(\omega_1^2 - \omega_2^2\right) - E_2\left(\omega_3^2 - \omega_4^2\right)\right)}{\omega_{ref}^2} \qquad (1)$$

$$CR_2^* = k_2^* \frac{\left(\cos(\alpha_1)\left(\omega_1^2 - \omega_2^2\right) - \cos(\alpha_2)\left(\omega_3^2 - \omega_4^2\right)\right)}{\omega_{ref}^2} \qquad (2)$$

où :

- ■ $k_1^*$ et $k_2^*$ sont des coefficients prédéterminés ;
- ■ $E_1$ et $E_2$ sont respectivement les demi-voies des trains avant et arrière du véhicule ;
- ■ $\alpha_1$ et $\alpha_2$ sont respectivement les angles de braquage des roues avant et des roues arrières du véhicule ; et
- ■ $\omega_{ref}^2$ est la moyenne des vitesses angulaires des roues non menées.

Toutefois, les critères quadratiques utilisés étant tout de même sensibles aux phénomènes dynamiques précités, il a été proposé dans la demande FR 2 664 536 des critères corrigés faisant intervenir les accélérations transversale et longitudinale du véhicule afin d'accroître la fiabilité du diagnostic.

Cependant, on observe encore de nombreuses fausses alertes par un système utilisant de tels critères corrigés, qu'ils soient ou non à l'aide des vitesses longitudinale et transversale. En effet, l'amplitude des phénomènes dynamiques reste toujours élevée par rapport à celle d'un sous-gonflage.

Le but de la présente invention est de résoudre le problème susmentionné en proposant un procédé améliorant la fiabilité de la détection indirecte du sous-gonflage des pneumatiques équipant les roues d'un véhicule vis-à-vis des phénomènes dynamiques influençant le rayon de roulement de celles-ci.

**EXPLOSE DE L'INVENTION**

A cet effet, l'invention a pour objet un procédé de détection de l'état de gonflage d'au moins un des pneumatiques équipant des paires de roues avant et arrière d'un véhicule automobile, chacune de ces paires étant associée à un essieu du véhicule, du type comportant une mesure des vitesses angulaires des roues du véhicule et une analyse des vitesses mesurées pour détecter ledit état de gonflage.

Selon l'invention, l'analyse comporte le report de chaque mesure de vitesse angulaire sur le milieu de l'essieu correspondant, et l'analyse porte sur les mesures reportées pour détecter ledit état de gonflage.

En d'autres termes, reporter les mesures des vitesses angulaires des roues sur le milieu de leur essieu respectif permet de réduire l'influence des virages sur la valeur des vitesses angulaires mesurées des roues.

En effet, comme cela a été mentionné plus haut, les vitesses angulaires des roues diffèrent du simple fait que le véhicule est engagé dans un virage. Ainsi, les roues du véhicule les plus proches du centre de rotation instantanée tournent plus vite que les roues les plus éloignées. Les mesures de vitesse angulaire résultantes peuvent ainsi être interprétées comme significatives d'un état de gonflage défectueux.

Reporter les mesures de ces vitesses sur le milieu des essieux élimine donc la différence de vitesses angulaires survenant du simple fait d'une prise de virage. Aussi, l'utilisation des mesures reportées en lieu et place des mesures directes permet une détection plus fiable de l'état de gonflage des pneumatiques.

Selon un mode de réalisation particulier de l'invention, le report d'une mesure de vitesse angulaire sur le milieu de l'essieu correspondant est réalisé selon la relation :

$$\omega_{i\_c} = \omega_i \frac{\left|R_\psi\right|}{\sqrt{\left(R_\psi + E_i\right)^2 + L_i^2}}$$

où $\omega_i$ est la mesure de la vitesse angulaire, $R_\psi$ est le rayon de courbure de la rotation instantanée du centre de gravité du véhicule, et $E_i$ et $L_i$ sont respectivement la demi voie et l'empattement de l'essieu associé ;

Selon un mode de réalisation particulier de l'invention, le report de la mesure de vitesse angulaire comporte le calcul du rayon de courbure selon la relation :

$$R_\psi = \frac{L_1 + L_2}{\tan\alpha_1 - \tan\alpha_2}$$

où $L_1$ et $L_2$ sont les empattements des essieux des paires de roues avant et arrière respectivement, $\alpha_1$ est l'angle de braquage de la paire de roues avant, et $\alpha_2$, est l'angle de braquage de la paire de roues arrière.

Selon un mode de réalisation particulier de l'invention, l'angle de braquage de la paire de roues avant est piloté au moyen d'un volant de direction, et en ce que le report de la mesure de la vitesse angulaire comporte une mesure de l'angle du volant de direction et le calcul de l'angle de braquage de la paire de roues avant en fonction de l'angle du volant de direction mesuré.

Selon un mode de réalisation particulier de l'invention, l'analyse des mesures de vitesse angulaire reportées comporte :

■ le calcul (en 26) d'au moins un critère $CR_j$ selon la relation :

$$CR_j = k_j \left( \frac{f_{1,1}^2 + f_{2,1}^2}{f_{1,2}^2 + f_{2,2}^2} - p_j \right)$$

où $p_j$ est un décalage prédéterminé, $k_j$ est un gain prédéterminés, $f_{1,1}$ et $f_{1,2}$ sont les inverses des mesures de vitesse angulaires reportées de deux roues parmi les quatre roues des paires de roues avant et arrière, et $f_{2,1}$ et $f_{2,2}$ sont les inverses des mesures de vitesse angulaire reportées des deux autres roues parmi les quatre roues des paires de roues avant et arrière ; et

■ la détection dudit état de gonflage en fonction du au moins un critère calculé.

Selon un mode de réalisation particulier de l'invention, le ou chaque critère est moyenné pendant une durée prédéterminée.

Selon un mode de réalisation particulier de l'invention, l'analyse comporte une surveillance de conditions prédéterminées de validité du ou chaque critère, le calcul du critère étant déclenché ou invalidé lorsque lesdites conditions ne sont pas satisfaites.

Selon un mode de réalisation particulier de l'invention, les inverses $f_{1,1}$ et $f_{1,2}$ sont celles des roues de l'essieu avant et les inverses $f_{2,1}$ et $f_{2,2}$ sont celles des roues de l'essieu arrière, et en ce que les conditions de validité du critère comprennent au moins l'une des conditions suivantes :

- le véhicule roule sensiblement en ligne droite ;
- le couple moteur du véhicule est sensiblement stabilisé ;
- il n'existe sensiblement pas de glissement des pneumatiques des roues motrices du véhicule ; et
- un système de contrôle de trajectoire et un système d'anti-blocage des roues équipant le véhicule sont inactifs.

Selon un mode de réalisation particulier de l'invention, les inverses $f_{1,1}$ et $f_{1,2}$ sont celles des roues sur un premier côté du véhicule et les inverses $f_{2,1}$ et $f_{2,2}$ sont celles des roues sur un second côté du véhicule, et en ce que les conditions de validité du critère comprennent au moins l'une des conditions suivantes :

- le véhicule roule sensiblement en ligne droite ;
- la trajectoire du véhicule est sensiblement stabilisée ;
- il n'existe sensiblement pas de glissement des pneumatiques des roues motrices du véhicule ; et
- un système de contrôle de trajectoire et un système d'anti-blocage des roues équipant le véhicule sont inactifs.

Selon un mode de réalisation particulier de l'invention, l'analyse des mesures de vitesse angulaire reportées comporte le calcul d'un critère $M_2$ selon la relation :

$$M_2 = \tan\left(\frac{CR_j}{C_r}\right)$$

où $C_r$ est le couple transmis aux roues motrices, les inverses $f_{1,1}$ et $f_{1,2}$ sont celles des roues de l'essieu avant et les inverses $f_{2,1}$ et $f_{2,2}$ sont celles des roues de l'essieu arrière.

Selon un mode de réalisation particulier de l'invention, l'analyse des mesures de vitesse angulaire reportées comporte le calcul d'un critère $M_3$ selon la relation :

$$M_3 = \tan\left(\frac{CR_j}{\alpha_{volant}}\right)$$

où $\alpha_{volant}$ est l'angle d'un volant de direction, les inverses $f_{1,1}$ et $f_{1,2}$ sont celles des roues sur un premier côté du véhicule et les inverses $f_{2,1}$ et $f_{2,2}$ sont celles des roues sur un second côté du véhicule.

Selon un mode de réalisation particulier de l'invention, le critère $M_2$ et/ou le critère $M_3$ sont utilisés pour confirmer ou infirmer un diagnostic relatif à plusieurs états de gonflage non satisfaisants.

Selon un mode de réalisation particulier de l'invention, les critères $M_2$ et $M_3$ sont utilisés pour diagnostiquer un état de gonflage non satisfaisant de l'ensemble des roues du véhicule.

Selon un mode de réalisation particulier de l'invention, lors d'une situation de vie dans laquelle au moins des variations dynamiques des rayons de roulement des pneumatiques sont sensiblement nulles, on procède au calibrage du décalage du ou de chaque critère de manière à annuler le critère ou une moyenne de durée prédéterminée de celui-ci.

Selon un mode de réalisation particulier de l'invention, le calibrage du décalage est déclenché lorsqu'au moins les conditions suivantes sont satisfaites :

- le véhicule roule sensiblement en ligne droite ;
- la trajectoire du véhicule est sensiblement stabilisée ;
- le couple moteur du véhicule est sensiblement stabilisé ;
- il n'existe sensiblement pas de glissement des pneumatiques des roues motrices du véhicule ; et
- un système de contrôle de trajectoire et un système d'anti-blocage des roues équipant le véhicule sont inactifs.

L'invention a également pour objet un système de détection de l'état de gonflage d'au moins un des pneumatiques équipant des paires de roues avant et arrière d'un véhicule automobile, chacune de ces paires étant associée à un essieu du véhicule, du type comportant des moyens de mesure des vitesses angulaires des roues du véhicule et des moyens d'analyse des vitesses mesurées pour détecter ledit état de gonflage.

Selon l'invention, les moyens d'analyse comportent des moyens de détermination du report de chaque mesure de vitesse angulaire sur le milieu de l'essieu correspondant, et des moyens de détection dudit état de gonflage en fonction des mesures de vitesse angulaire reportées.

Ce système met en oeuvre le procédé précité.

## BREVE DESCRIPTION DES FIGURES

L'invention sera mieux comprise à la lecture de la description qui va suivre, donnée uniquement à titre d'exemple, et faite en relation avec les dessins annexés, dans lesquels :

- la figure 1 est une vue schématique d'un véhicule équipée d'une paire de roue avant et d'un paire de roues arrière ;
- la figure 2 est un organigramme d'un procédé selon l'invention ;
- la figure 3 est un tracé illustrant l'évolution entre un couple à la roue et un des critères utilisés par le procédé selon l'invention ; et
- la figure 4 est un tracé illustrant l'évolution entre un angle volant et un autre des critères utilisés par le procédé selon l'invention.

## DESCRIPTION DETAILLEE DE L'INVENTION

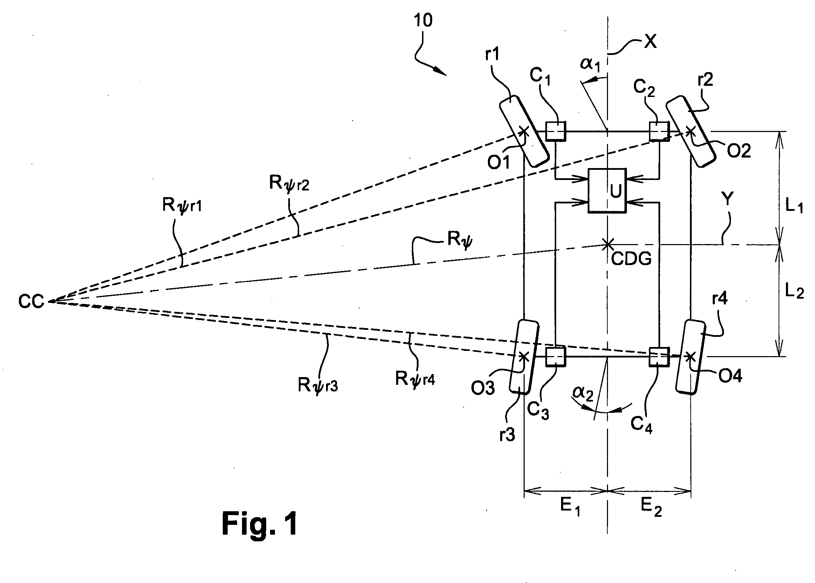

Sur la figure 1, un véhicule automobile 10 comprend un train avant comportant une paire de roues avant motrices r1 et r2 montées sur un essieu avant, et train arrière comportant une paire de roues arrière menées r3 et r4, montées sur un essieu arrière. Les roues sur le côté gauche du véhicule 10 sont ici les roues r1 et r3, et les roues sur le côté droit du véhicule 10 sont les roues r2 et r4.

En outre, chacune des roues r1, r2, r3, r4 du véhicule 10 est équipée d'un pneumatique dont on diagnostique l'état de gonflage.

Un repère orthogonal est par ailleurs associé au véhicule 10, ce repère ayant pour centre le centre de gravité CDG du véhicule 10, et ayant pour axes des abscisses et des ordonnées des axes transversal X et longitudinal Y du véhicule 10 respectivement.

Dans ce repère (CDG, X, Y), le centre des roues r1, r2, r3 et r4 ont respectivement pour coordonnées ($-E_1$, $L_1$), ($E_1$, $L_1$), ($-E_2$, $-L_2$) et ($E_2$, $-L_2$), où :

- $E_1$ est la demi-voie du train avant ;
- $E_2$ est la demi-voie du train arrière ;
- $L_1$ est l'empattement du train avant ; et
- $L_2$ est l'empattement du train arrière.

Le véhicule 10 connaît par ailleurs une rotation instantanée de son centre de gravité CDG autour d'un axe Z perpendiculaire au plan des axes X et Y et passant par un centre de rotation instantanée CC dans le plan (X, Y). Le centre o1, o2, o3, o4 de chacune des roues r1, r2, r3 et r4 est situé à une distance $R_{\psi r1}$, $R_{\psi r2}$, $R_{\psi r3}$, $R_{\psi r3}$, et le centre de gravité à une distance $R_\psi$, du centre de rotation instantanée CC.

Chacune des paires de roues avant r1, r2 et arrière r3, r4 est par ailleurs directrice. La paire de roues avant r1, r2 présente ainsi un angle de braquage $\alpha$, par rapport à un axe longitudinal Y, cet angle de braquage $\alpha_1$, étant piloté par le conducteur du véhicule au moyen d'un volant de direction.

La paire de roues arrière r3, r4 présente quant à elle un angle de braquage $\alpha_2$ par rapport à l'axe longitudinal Y, l'angle de braquage $\alpha_2$ étant piloté par un moteur de direction arrière dédié.

Enfin, chacune des roues r1, r2, r3, r4 du véhicule 10 est équipée d'un capteur c1, c2, c3, c4 mesurant la vitesse angulaire $\omega_1$, $\omega_2$, $\omega_3$, $\omega_4$ de celle-ci, et le véhicule 10 comporte une unité de traitement d'informations U, connectée auxdits capteurs et réalisant un traitement de ces mesures pour diverses fonctionnalités, comme un anti-blocage des roues par exemple.

L'agencement et le fonctionnement des organes venant d'être décrits sont classiques et ne seront pas décrit plus en détail par la suite pour des raisons de concision.

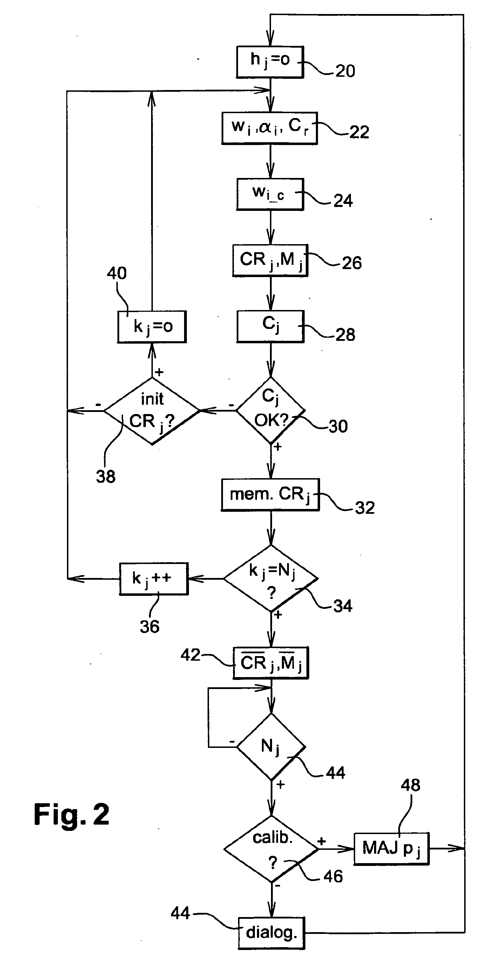

L'unité de traitement d'informations U met en oeuvre un procédé de détection de l'état de gonflage des pneumatiques r1, r2, r3, r4 selon l'invention et illustré par l'organigramme de la figure 2.

Consécutivement au démarrage du véhicule, deux compteurs $k_1$ et $k_2$ sont initialisés à zéro dans une étape 20.

Dans une étape 22 suivante, les vitesses angulaires $\omega_1$, $\omega_2$, $\omega_3$, $\omega_4$ ainsi que les angles de braquage $\alpha_1$ et $\alpha_2$ sont mesurés. Dans une première variante, les angles de braquage $\alpha_1$ et $\alpha_2$ sont mesurés à l'aide de capteurs appropriés agencés dans le véhicule.

En variante, la mesure de l'angle de braque $\alpha_1$ de la paire de roues avant r1, r2 est estimée selon la relation

$$\alpha_1 = \frac{\alpha_{volant}}{dem}$$ , où $\alpha_{volant}$ est l'angle du volant de direction mesurée par un capteur équipant celui-ci, et dem est le rapport de démultiplication introduit par la direction entre l'angle de braquage avant $\alpha_1$ et l'angle volant $\alpha_{volant}$.

En variante également, la mesure de l'angle de braquage $\alpha_2$, des roues arrière r3, r4 est choisie égale à la consigne de braquage délivrée au moteur pilotant le braquage des roues arrière.

Dans l'étape 22, le couple $C_r$ transmis aux roues motrices, ici les roues avant r1 et r2, est également mesuré ou estimé, comme cela est connu en soi.

Dans une étape 24 suivante, les mesures des vitesses angulaires $\omega_1$, $\omega_2$, $\omega_3$, $\omega_4$ sont reportées sur le milieu de leur essieu respectif, c'est-à-dire au point $(0, L1)$ pour les mesures $\omega_1$ et $\omega_2$, et au point $(0, -L_2)$ pour les mesures $\omega_3$ et $\omega_4$.

Plus particulièrement, le report des mesures des vitesses angulaires est calculé selon les relations :

$$\omega_{1\_c} = \omega_1 \frac{|R_\psi|}{\sqrt{(R_\psi + E_1)^2 + L_1^2}} \qquad (3)$$

$$\omega_{2\_c} = \omega_2 \frac{|R_\psi|}{\sqrt{(R_\psi + E_1)^2 + L_1^2}} \qquad (4)$$

$$\omega_{3\_c} = \omega_3 \frac{|R_\psi|}{\sqrt{(R_\psi + \beta_1 E_2)^2 + L_2^2}} \qquad (5)$$

$$\omega_{4\_c} = \omega_4 \frac{|R_\psi|}{\sqrt{(R_\psi + E_2)^2 + L_2^2}} \qquad (6)$$

$$R_\psi = \frac{L_1 + L_2}{\tan\alpha_1 - \tan\alpha_2} \qquad (7)$$

où $\omega_{1\_c}$, $\omega_{2\_c}$, $\omega_{3\_c}$, et $\omega_{4\_c}$, sont les mesures reportées des roues r1, r2, r3 et r4 respectivement.

Dans une étape 26 suivante, des critères $CR_1$, $CR_2$, $CR_3$, $M_2$, et $M_3$ sont calculés selon les relations :

$$CR_1 = k_1 \left( \frac{f_{1\_c}^2 + f_{4\_c}^2}{f_{2\_c}^2 + f_{3\_c}^2} - p_1 \right) \qquad (8)$$

$$CR_2 = k_2 \left( \frac{f_{1\_c}^2 + f_{2\_c}^2}{f_{3\_c}^2 + f_{4\_c}^2} - p_2 \right) \qquad (9)$$

$$CR_3 = k_3 \left( \frac{f_{1\_c}^2 + f_{3\_c}^2}{f_{2\_c}^2 + f_{4\_c}^2} - p_3 \right) \qquad (10)$$

$$M_2 = \tan\left( \frac{CR_2}{C_r} \right) \qquad (11)$$

$$M_3 = \tan\left( \frac{CR_3}{\alpha_{volant}} \right) \qquad (12)$$

$$f_{i\_c} = \frac{1}{\omega_{i\_c}}, \; i = 1, 2, 3, 4 \qquad (11)$$

où :

- $k_1$, $k_2$, et $k_3$ sont des coefficients de normalisation prédéterminés choisis de manière à ce que les critères $CR_1$, $CR_2$, $CR_3$ soient du même ordre de grandeur ; et
- $p_1$, $p_2$, et $p_3$ sont des coefficients prédéterminés de calibrage des critères $CR_1$, $CR_2$, $CR_3$, comme cela sera expliqué plus en détail par la suite.

Le critère $CR_1$ compare les vitesses angulaires de la paire de roues en diagonale r1 et r4 aux vitesses angulaires de la paire de roue en diagonale r2 et r3.

Le critère $CR_2$ compare quant à lui les vitesses angulaires des roues avant r1 et r4 aux vitesses angulaires des roues arrière r3 et r4.

Enfin, le critère $CR_3$ compare les vitesses angulaires des roues gauches r1 et r3 aux vitesses angulaires des roues droite r2 et r4.

Comme cela sera expliqué plus en détail par la suite, la valeur des critères $CR_1$, $CR_2$, $CR_3$ permet de déterminer l'état de gonflage de chaque pneumatique, y compris dans les situations où plusieurs pneumatiques présentent un gonflage défectueux.

Les critères $M_2$ et $M_3$ permettent quant à eux d'établir un diagnostic plus fiable en présence de phénomènes dynamiques perturbateurs, telles qu'une variation des dérives et des raideurs des pneumatiques ou encore une augmentation de la résistance de roulement de ceux-ci, comme cela sera également expliqué plus en détail par la suite.

Le procédé se poursuit en 28 par le calcul de conditions de validité $C_1$, $C_2$, $C_3$, $C_4$, $C_5$ selon les relations :

$$C_1 : \left|\alpha_1\right| \leq \alpha_{1\_max} \quad ET \quad \left|\alpha_2\right| \leq \alpha_{2\_max} \qquad (13)$$

$$C_2 : \left|\frac{dCR_1}{dt}\right| \leq \varepsilon_1 \quad ET \quad \left|\frac{dCR_2}{dt}\right| \leq \varepsilon_2 \quad ET \quad \left|\frac{dCR_3}{dt}\right| \leq \varepsilon_3 \qquad (14)$$

$$C_3 : \left|\frac{d\omega_{ref}}{dt}\right| \leq a_{min} \qquad (15)$$

$$C_4 : \left|\omega_1 - \omega_{ref}\right| \leq S_{max} \quad ET \quad \left|\omega_2 - \omega_{ref}\right| \leq S_{max} \qquad (16)$$

$C_5$ : contrôle de trajectoire et anti-blocage de roues désactivés

La première condition $C_1$ traduit le fait que le véhicule 10 roule sensiblement en ligne droite, la seconde condition $C_2$ que la trajectoire du véhicule est sensiblement stabilisée, la troisième condition $C_3$ que le couple moteur est sensiblement stabilisé et la quatrième condition $C_4$ qu'il n'existe sensiblement pas de glissement des pneumatiques des roues motrices r1 et r2 induit par la traction de celles-ci.

Le procédé se poursuit alors par une étape 30 dans laquelle il est testé si les critères $CR_1$, $CR_2$, $CR_3$, $M_1$ et $M_2$ calculés à l'étape 26 sont valides.

Comme, il a été discuté précédemment, la validité de ces critères, basés sur des vitesses angulaires mesurées, est importante dans la mesure où de nombreux phénomènes dynamiques, comme une prise de virage, une pente ou un glissement des roues par exemple, provoquent des variations non homogènes parmi les rayons de roulement des roues r1, r2, r3 et r4. L'absence de vérification concernant l'existence de tels phénomènes augmente donc le taux de fausse alerte concernant un état défectueux des pneumatiques.

On remarque que lorsque les conditions $C_1$, $C_2$, $C_3$, $C_4$, $C_5$ sont réunies, le véhicule roule selon une trajectoire stabilisée rectiligne avec un risque de glissement des roues minime. Les phénomènes dynamiques faisant varier le rayon de roulement des roues r1, r2, r3 et r4 sont ainsi minimisés. On s'assure alors qu'une disparité parmi les vitesses angulaires mesurées présente une probabilité forte de traduire un état de gonflage défectueux d'au moins un des pneumatiques.

Toutefois, les critères $CR_1$, $CR_2$, $CR_3$ ne sont pas sensibles de la même manière aux différentes conditions de validité $C_1$, $C_2$, $C_3$, $C_4$, $C_5$. Par exemple, les critères CR1 et CR3 sont plus sensibles aux prises de virage par le véhicule. La satisfaction de la condition C1 minimise ainsi l'effet des phénomènes dynamiques sur les critères CR1 et CR3.

Plus particulièrement, il est testé en 30 si un premier ensemble de conditions de validité, à savoir les conditions $C_1$, $C_2$, $C_4$, $C_5$, est satisfait. Dans un tel cas, les critères $CR_2$ et $M_2$ sont considérés comme étant valides, c'est-à-dire que leurs valeurs ne sont pas générées par un phénomène dynamique perturbateur.

Il est également testé en 30 si un second ensemble de conditions de validité, à savoir les conditions $C_1$, $C_3$, $C_4$, $C_5$, est satisfait. Dans un tel cas, les critères $CR_1$, $CR_3$ et $M_3$ sont considérés comme étant valides.

Dans le cas où les critères $CR_1$, $CR_2$ et $M_2$ sont considérés comme étant valides en 30, leurs valeurs sont mémorisés lors d'une étape 32. De même, dans le cas où les critères $CR_3$ et $M_3$ sont considérés étant valides en 30, leurs valeurs sont mémorisées en 32.

L'étape 32 se poursuit alors par une étape 34 dans laquelle un test sur la valeur des compteurs $k_1$ et $k_2$ est mise en oeuvre. Le compteur $k_1$ est associé aux critères $CR_1$, $CR_3$ et $M_3$ et compte le nombre de valeurs valides mémorisées de ceux-ci. De manière analogue, le compteur $k_2$ est associé aux critères $CR_2$ et $M_2$ et compte le nombre de valeurs valides mémorisées de ceux-ci.

Plus particulièrement, les valeurs des compteurs $k_1$ et $k_2$ sont comparées, en 34, à des valeurs maximales prédéterminées $N_1$ et $N_2$ respectivement, les valeurs $N_1$ et $N_2$ est par exemple égales.

Si le résultat du test mis en oeuvre sur le compteur $k_1$ est négatif, c'est-à-dire si la valeur de $k_1$ est inférieure à $N_1$, le compteur $k_1$ est incrémenté, en 36, d'une unité et l'étape 36 reboucle sur l'étape 22 pour l'acquisition de nouvelles valeurs valides pour les critères $CR_1$, $CR_3$ et $M_3$.

De même, si le résultat du test mis en oeuvre sur le compteur $k_2$ est négatif, c'est-à-dire si la valeur de $k_2$ est inférieure à $N_2$, le compteur $k_2$ est incrémenté, en 36, d'une unité et l'étape 36 reboucle sur l'étape 22 pour l'acquisition de nouvelles valeurs valides pour les critères $CR_2$ et $M_2$.

Si le test mis en oeuvre en 30 est négatif, c'est-à-dire si l'un et/ou l'autre du premier et second ensemble de condition n'est pas satisfait, une étape 38 de test est mise en oeuvre pour savoir si l'acquisition des critères associés à chaque ensemble non satisfait doit être réinitialisée. Par exemple, une analyse de valeurs aberrantes est mise en oeuvre en 38.

Si le résultat de ce test est positif, chaque compteur associé à un ensemble non satisfait est alors initialisé à zéro en 40, et l'étape 40 boucle sur l'étape 22 afin de recommencer le cycle d'acquisition des critères correspondants. Sinon, l'étape 38 boucle sur l'étape 22 sans mémorisation des critères correspondants.

Une fois $N_1$ valeurs valides acquises pour les critères $CR_1$, $CR_3$ et $M_3$, les $N_1$ valeurs de chacun des ces critères, mémorisées lors de l'étape 32, sont moyennées, en 42, pour obtenir des critères moyennés $\overline{CR}_1$, $\overline{CR}_3$ et $\overline{M}_3$.

De même, une fois $N_2$ valeurs valides acquises pour les critères $CR_2$ et $M_2$, les $N_2$ valeurs de chacun des ces critères, mémorisées lors de l'étape 32, sont moyennées, également en 42, pour obtenir des critères moyennés $\overline{CR}_2$ et $\overline{M}_2$.

Le procédé se poursuit alors par une étape 44 de test pour savoir si les compteurs $k_1$ et $k_2$ ont atteints les valeurs maximales $N_1$ et $N_2$ respectives. Si tel n'est pas le cas, l'étape 44 reboucle sur elle-même afin d'attendre que cet état se produise.

Si le test mis en oeuvre en 44 est positif, un test est alors déclenché en 46 pour savoir si un calibrage des décalages $p_1$, $p_2$, et $p_3$ doit être déclenché.

En effet, les critères $CR_1$, $CR_2$, $CR_3$, $M_2$ et $M_3$, utilisés pour diagnostiquer l'état de gonflage des pneumatiques, se fondent, au travers de la mesure des vitesses angulaires, sur les rayons de roulement des roues.

Aussi, si les rayons de roulement des roues sont égaux, on aura alors, dans le cas où les décalages $p_1$, $p_2$, et $p_3$ sont égaux à zéro, des critères $CR_1$, $CR_2$, $CR_1$, $M_2$ et $M_3$ également égaux à zéro.

Or, il est possible d'avoir des pressions identiques dans les pneumatiques sans pour autant avoir des rayons de roulements identiques. Il est ainsi possible que les pneumatiques soient correctement gonflées tout en présentant des rayons de roulement différent. Par exemple, des pneumatiques différents peuvent être montés sur le véhicule, ou bien les pneumatiques peuvent présenter une usure différente. Quand on sait par ailleurs qu'une variation de 1 bar dans un pneumatique induit une variation du rayon de roulement de la roue inférieure à 1 pourcent, on comprend aisément l'utilité de calibrer précisément les critères $CR_1$, $CR_2$, $CR_3$ pour que ceux-ci ne présentent sensiblement aucun décalage, ou « offset », et que la valeur nulle de ceux-ci correspondent effectivement à une situation de gonflage nominale des pneumatiques.

Le calibrage des offsets des critères $CR_1$, $CR_2$, $CR_3$ est effectuées périodiquement ou à chaque changement de pneumatique ou à chaque regonflage, le calibrage étant par exemple lancé lors d'un appui sur un bouton RESET prévu à cet effet dans le véhicule. De plus, le calibrage est effectué si toutes les conditions de validité $C_1$, $C_2$, $C_3$, $C_4$, $C_5$ ont été satisfaites simultanément lors de la mémorisation des valeurs des critères $CR_1$, $CR_2$, $CR_3$. On s'assure ainsi que le calcul des offsets n'est pas perturbé par les phénomènes dynamiques précités.

En outre, le calibrage est déclenché lorsqu'il est également certain que l'état de gonflage des pneumatiques est satisfaisant. Par exemple, le calibrage n'est déclenché que si un diagnostic précédent de l'état de gonflage des pneumatiques n'a révélé aucune anomalie, ou bien le calibrage est déclenché sur ordre d'un opérateur, après que celui-ci se soit assurer de gonflage satisfaisant des pneumatiques.

Si le test en 46 pour savoir si un calibrage doit être effectué est positif, c'est-à-dire qu'il est notamment considéré que les pneumatiques présentent un gonflage satisfaisant, une étape 48 de mise à jour des offsets $p_1$, $p_2$, $p_3$ est alors déclenchée.

Dans cette étape 48, les offsets $p_1$, $p_2$, et $p_3$ sont respectivement remplacés par les valeurs moyennées $\overline{CR}_1$, $\overline{CR}_2$, et $\overline{CR}_3$. Les nouveaux critères moyennés ainsi mis à jour prennent alors une valeur nulle, représentative du bon gonflage des pneumatiques. L'étape de mise à jour 48 boucle alors sur l'étape d'initialisation 20 pour un nouveau cycle de diagnostic.

Si le test mis en oeuvre en 46 est négatif, c'est-à-dire si aucun calibrage n'est requis, une étape 50 de diagnostic est alors déclenchée en fonction des valeurs moyennées $\overline{CR}_1$, $\overline{CR}_2$, $\overline{CR}_3$, $\overline{M}_2$ et $\overline{M}_3$, comme cela est décrit ci-dessous.

Plus particulièrement, lors de l'étape de diagnostic 50, différentes configurations de sous-gonflage sont considérées, à savoir un simple sous-gonflage, un double sous-gonflage sur une diagonale du véhicule, un double sous-gonflage sur un côté du véhicule, un double sous-gonflage sur un essieu du véhicule, un triple sous gonflage et un quadruple sous-gonflage.

Pour chacune de ces configurations des tests spécifiques sont mis en oeuvre comme cela est à présent décrit.

DIAGNOSTIC D'UN UNIQUE SOUS-GONFLAGE

Le diagnostic d'un unique sous-gonflage d'un pneumatique est réalisé en utilisant simultanément les critères $\overline{CR}_1$, $\overline{CR}_2$, $\overline{CR}_3$ selon les règles du tableau 1 suivant.

Les termes AVG, AVD, ARG et ARD désignent respectivement « avant gauche » (roue r1), « avant droit » (roue r2), « arrière gauche » (roue r3) et « arrière droit » (roue (r4). Le signe « * » désigne quant à lui n'importe quelle valeur, c'est-à-dire que le critère auquel il se rapporte est indifférent dans le diagnostic.

Les paramètres $CR_1^{\max}$, $CR_2^{\max}$ et $CR_3^{\max}$ et $CR_3^{\max}$ sont des valeurs positives prédéterminées réglant la sensibilité de la détection du sous-gonflage.

**Tableau 1 : diagnostic d'un unique sous-gonflase d'un pneumatiaque du véhicule**

| Pneu | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| ARG | $\overline{CR}_1 \geq CR_1^{\max}$ | $\overline{CR}_3 \leq -CR_3^{\max}$ | $\overline{CR}_2 \geq CR_2^{\max}$ | * | * |
| ARD | $\overline{CR}_1 \leq -CR_1^{\max}$ | $\overline{CR}_3 \geq CR_3^{\max}$ | $\overline{CR}_2 \geq CR_2^{\max}$ | * | * |
| AVG | $\overline{CR}_1 \leq -CR_1^{\max}$ | $\overline{CR}_3 \leq -CR_3^{\max}$ | $\overline{CR}_2 \leq -CR_2^{\max}$ | * | * |
| AVD | $\overline{CR}_1 \geq CR_1^{\max}$ | $\overline{CR}_3 \geq CR_3^{\max}$ | $\overline{CR}_2 \leq -CR_2^{\max}$ | * | * |

DIAGNOSTIC DE DEUX SOUS-GONFLAGES SIMULTANES SUR UNE DIAGONALE

Le sous-gonflage simultané des pneumatiques de deux roues agencées en diagonale sur le véhicule est diagnostiqué en utilisant simultanément les critères $\overline{CR}1$ et $\overline{CR}_3$ selon les règles du tableau 2 suivant.

**Tableau 2 : diagnostic du sous-gonflage des pneumatiques d'une diagonale du véhicule**

| Pneus | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| ARG-AVD | $\overline{CR}_1 \geq CR_1^{\max}$ | $\left|\overline{CR}_3\right| \leq CR_3^{\max}$ | * | * | * |
| ARD-AVG | $\overline{CR}_1 \leq -CR_1^{\max}$ | $\left|\overline{CR}_3\right| \leq CR_3^{\max}$ | * | * | * |

Par rapport à un simple sous-gonglage, un double sous-gonflage sur une diagonale amplifie la valeur absolue du critère $\overline{CR}_1$. Pour diagnostiquer un tel sous-gonflage, la valeur du critère $\overline{CR}_3$ doit cependant restée bornée. En effet, comme il y a une roue sous-gonflée par côté du véhicule, le critère $\overline{CR}_3$ est donc peu affecté.

DIAGNOSTIC DE DEUX SOUS-GONFLAGES SIMULTANES SUR UN COTE

Le sous-gonflage simultané des pneumatiques de deux roues agencées le même côté du véhicule est également diagnostiqué en utilisant simultanément les critères $\overline{CR}_1$ et $\overline{CR}_3$ selon les règles du tableau 3 suivant.

**Tableau 3 : diagnostic du sous-contlaee des pneumatiques d'un côté du véhicule**

| Pneus | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| ARG-AVG | $\left|\overline{CR}_1\right| \leq CR_1^{\max}$ | $\overline{CR}_3 \geq CR_3^{\max}$ | * | $\left|\overline{M}_3 - m_{CR_3}\right| \leq M_3^{\max}$ (optionnel) | * |

(suite)

| Pneus | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| ARD-AVD | $\left|\overline{CR}_1\right| \leq CR_1^{\max}$ | $\overline{CR}_3 \leq -CR_3^{\max}$ | * | $\left|\overline{M}_3 - m_{CR_3}\right| \leq M_3^{\max}$ (optionnel) | * |

Par rapport à un simple sous-gonglage, un double sous-gonflage sur une diagonale amplifie la valeur absolue du critère $\overline{CR}_3$. Pour diagnostiquer un tel sous-gonflage, la valeur du critère $\overline{CR}_1$ doit cependant rester bornée. En effet [*VEUILLEZ DETAILLER PEU PLUS SVP*]

De manière optionnelle, afin d'améliorer la fiabilité du diagnostic, le critère $\overline{M}_3$ est également utilisé. Il est ainsi possible de créer plusieurs niveaux d'alerte. Un premier niveau d'alerte est ainsi déclenché par les critères $\overline{CR}_1$ et $\overline{CR}_3$. Si le premier niveau d'alerte est déclenché, le second niveau d'alerte alors déclenché par le critère $\overline{M}_3$.

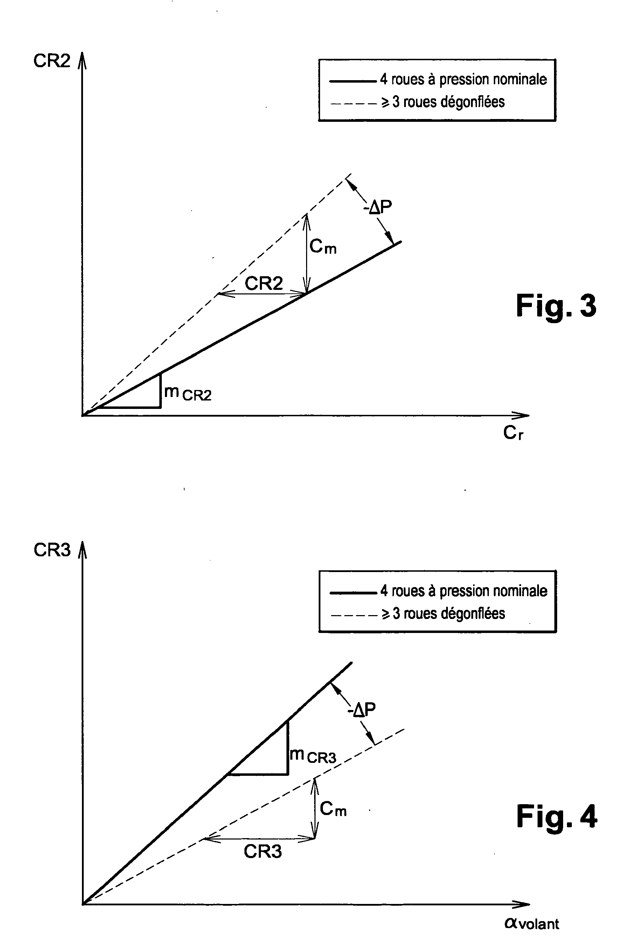

Comme cela est visible sur les figures 3 et 4, il existe une relation linéaire entre le critère le critères $CR_2$ et le couple $C_r$ transmis aux roues motrices r1 et r2 et une relation linéaire entre le critère $CR_3$ et l'angle volant $\alpha_{volant}$. Les critères $\overline{M}_2$ et $\overline{M}_3$ sont donc respectivement les gains de ces relations linéaires. Dans un état de gonflage nominal des roues du véhicules, ces gains sont respectivement égaux à $m_{CR_2}$ et $m_{CR_3}$, les valeurs $m_{CR_2}$ et $m_{CR_3}$ étant établies par exemple en usine et/ou lors du processus de calibrage des décalages $p_1$, $p_2$, et $p_3$ décrits précédemment.

En outre, la variation des critères $\overline{M}_2$ et $\overline{M}_3$ est d'autant plus marqué qu'au sous-gonflage est présent sur au moins trois roues. Par conséquent, une variation non significative des critères $\overline{M}_2$ et $\overline{M}_3$ lors d'un diagnostic de sous-gonflage des roues agencées sur un essieu confirme qu'il n'y a moins de trois roues sous-gonflées.

Le critère $\overline{M}_3$ est donc utilisé pour confirmer qu'uniquement deux roues sont sous-gonflées en testant si l'écart entre le critère $\overline{M}_3$ et sa valeur nominale $m_{CR_3}$ est inférieure à un seuil positif prédéterminé $M_3^{\max}$ qui règle la sensibilité du diagnostic vis-à-vis du critère $\overline{M}_3$.

## DIAGNOSTIC DE DEUX SOUS-GONFLAGES SIMULTANES SUR UN ESSIEU

La détection d'un sous-gonflage simultané des pneumatiques sur un essieu est usuellement délicate à mettre en oeuvre et le déclenchement d'une alerte nécessite un temps de convergence beaucoup plus élevé que dans d'autres cas.

Par rapport à un simple sous-gonglage, un double sous-gonflage sur un essieu amplifie la valeur absolue du critère $\overline{CR}_2$. Pour diagnostiquer un tel sous-gonflage, les critères $\overline{CR}_1$, $\overline{CR}_3$ doivent cependant restés bornés. En effet, c'est un moyen de confirmer que les problèmes de sous-gonflage sont concentrés uniquement sur un essieu et pas ailleurs.

La localisation et la détection d'un double sous-gonflage sur l'essieu avant ou l'essieu arrière du véhicule sont donc réalisables à l'aide des seuls critères $\overline{CR}_1$, $\overline{CR}_2$ et $\overline{CR}_3$.

Cependant, un diagnotic fiable d'une telle situation est obtenu si les conditions de roulement du véhicule sont favorables, c'est-à-dire qu'il n'existe sensiblement pas de phénomènes dynamiques influençant la vitesse de rotation angulaire des roues, tels qu'un virage, un patinage, une pente, un dévers ou du vent fort.

De telles conditions sont vérifiées par le fait que chacun des critères $\overline{CR}_1$, $\overline{CR}_2$ $\overline{CR}_3$, $\overline{M}_2$ et $\overline{M}_3$; est évalué lorsque des conditions de validités associées parmi les conditions $C_1$, $C_2$, $C_3$, $C_4$, $C_5$ sont satisfaites.

Toutefois, même en s'assurant que les conditions $C_1$, $C_2$, $C_3$, $C_4$, $C_5$ sont satisfaites, certains phénomènes perturbateurs non pris en compte par ces conditions, comme par exemple une pente, un dévers ou un vent fort, peuvent survenir et fausser un diagnostic fondés uniquement sur les critères $\overline{CR}_1$, $\overline{CR}_2$ $\overline{CR}_3$.

En outre, le diagnostic de deux sous-gonflages sur un essieu du véhicule se fonde essentiellement sur le critère $\overline{CR}_2$ qui compare les vitesses angulaires des essieux avant et arrière du véhicule. Le critère $\overline{CR}_2$ est cependant très sensible au phénomène de glissement des roues motrices, phénomène qui dépend des caractéristiques de la chaussée sur laquelle roule le véhicule et qui est par conséquent difficilement détectable à l'aide de grandeur uniquement liées au véhicule.

Les critères $\overline{M}_2$ et $\overline{M}_3$ permettent d'une manière fiable et robuste de s'affranchir de tels phénomènes en confirmant ou infirmant le diagnostic réalisé à l'aide des critères $\overline{CR}_1$, $\overline{CR}_2$ $\overline{CR}_3$.

En effet, on notera que les critères $\overline{CR}_1$, $\overline{CR}_2$, $\overline{CR}_3$; sont des critères cinématiques se fondant sur une comparaison de vitesses alors que les critères $\overline{M}_2$ et $\overline{M}_3$ se fondent sur la physique des pneumatiques et sont donc liés plus directement à la pression dans ceux-ci. Les critères $\overline{M}_2$ et $\overline{M}_3$ vont donc au-delà de la simple comparaison de vitesses.

On montre ainsi que le critère $\overline{M}_2$ varie en fonction de la résistance aux roulements de pneumatique, phénomène particulièrement visible à vitesse constante et sur une ligne droite ou en faible virage), et que le critère $\overline{M}_3$; varie en

fonction de variation des dérives et des raideurs des pneumatiques induites par un ou plusieurs sous-gonflages.

Le diagnostic d'un double sous-gonflage sur l'essieu avant ou l'essieu arrière du véhicule est ainsi réalisé selon les règles du tableau 4 suivant.

Le seuil $M_2^{\max}$ est une valeur positive prédéterminée qui règle la sensibilité du diagnostic vis-à-vis du critère $\overline{M}_2$.

**Tableau 4 : diagnostic du sous-gonflage simultané de deux pneumatiques sur un même essieu**

| Pneus | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| ARG-ARD | $\left\|\overline{CR}_1\right\| \leq CR_1^{\max}$ | $\left\|\overline{CR}_3\right\| \leq CR_3^{\max}$ | $\overline{CR}_2 \geq CR_2^{\max}$ | $\left\|\overline{M}_3 - m_{CR_3}\right\| \leq M_3^{\max}$ | $\left\|\overline{M}_2 - m_{CR_2}\right\| \leq M_2^{\max}$ |
| AVG-AVD | $\left\|\overline{CR}_1\right\| \leq CR_1^{\max}$ | $\left\|\overline{CR}_3\right\| \leq CR_3^{\max}$ | $\overline{CR}_2 \leq -CR_2^{\max}$ | $\left\|\overline{M}_3 - m_{CR_3}\right\| \leq M_3^{\max}$ | $\left\|\overline{M}_2 - m_{CR_2}\right\| \leq M_2^{\max}$ |

## DIAGNOSTIC DE TROIS SOUS-GONFLAGES SIMULTANES

Le cas de trois sous-gonflages simultanés se traduit comme la superposition des cas précédemment décrits.

Dans de bonnes conditions de roulage du véhicule, les critères $\overline{CR}_1$, $\overline{CR}_2$ $\overline{CR}_3$ sont suffisants pour établir un tel diagnostic.

Cependant, pour les raisons évoquées précédemment, les critères $\overline{M}_2$ et $\overline{M}_3$ sont également utilisés pour confirmer ou infirmer le diagnostic réalisé à l'aide des critères $\overline{CR}_1$, $\overline{CR}_2$ $\overline{CR}_3$.

En conséquence, le diagnostic de trois sous-gonflage est réalisé selon les règles du tableau 5 suivants.

**Tableau 5 : diagnostic de trois sous-gonflages simultanés**

| Pneus | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| AVD-ARD-AVG | $\overline{CR}_1 \leq -CR_1^{\max}$ | $\overline{CR}_3 \geq CR_3^{\max}$ | $\overline{CR}_2 \leq -CR_2^{\max}$ | $\overline{M}_3 - m_{CR_3} \leq -M_3^{\max}$ | $\overline{M}_2 - m_{CR_2} \geq M_2^{\max}$ |
| AVD-ARG-AVG | $\overline{CR}_1 \geq CR_1^{\max}$ | $\overline{CR}_3 \leq -CR_3^{\max}$ | $\overline{CR}_2 \leq -CR_2^{\max}$ | $\overline{M}_3 - m_{CR_3} \leq -M_3^{\max}$ | $\overline{M}_2 - m_{CR_2} \geq M_2^{\max}$ |
| ARG-AVD-ARD | $\overline{CR}_1 \geq CR_1^{\max}$ | $\overline{CR}_3 \geq CR_3^{\max}$ | $\overline{CR}_2 \geq CR_2^{\max}$ | $\overline{M}_3 - m_{CR_3} \leq -M_3^{\max}$ | $\overline{M}_2 - m_{CR_2} \geq M_2^{\max}$ |
| ARG-AVG-ARD | $\overline{CR}_1 \leq -CR_1^{\max}$ | $\overline{CR}_3 \leq -CR_3^{\max}$ | $\overline{CR}_2 \geq CR_2^{\max}$ | $\overline{M}_3 - m_{CR_3} \leq -M_3^{\max}$ | $\overline{M}_2 - m_{CR_2} \geq M_2^{\max}$ |

## DIAGNOSTIC DE QUATRE SOUS-GONFLAGES SIMULTANES

Le diagnostic d'un sous-gonflage simultanée des quatre roues du véhicule est difficile, voir impossible, à l'aide des seuls critères $\overline{CR}_1$, $\overline{CR}_2$ $\overline{CR}_3$. En effet, ces critères se fondent sur une comparaison de vitesses angulaires et par conséquent des variations relatives entre celle-ci. Ainsi, si les quatre pneumatiques présentent un dégonflage sensiblement identique, l'utilisation des critères $\overline{CR}_1$, $\overline{CR}_2$ $\overline{CR}_3$ ne permet pas de le diagnostiquer.

L'utilisation des critères $\overline{M}_2$ et $\overline{M}_3$ permet de résoudre ce problème car ils s'écartent de leur valeur nominale de manière significative lorsqu'au moins trois pneumatiques sont sous-gonflés.

Le diagnostic d'un tel sous-gonflage est ainsi réalisé selon les règles du tableau 6 suivant.

**Tableau 6 : diagnostic du sous-gonflage simultané des quatre roues**

| Pneus | $\overline{CR}_1$ (diagonales) | $\overline{CR}_3$ (côtés) | $\overline{CR}_2$ (essieux) | $\overline{M}_3$ (virage) | $\overline{M}_2$ (couple) |
|---|---|---|---|---|---|
| AVD-ARD-AVG-ARD | $\left|\overline{CR}_1\right| \le CR_1^{\max}$ | $\left|\overline{CR}_3\right| \le CR_3^{\max}$ | $\left|\overline{CR}_2\right| \le CR_2^{\max}$ | $\overline{M}_3 - m_{CR_3}$ $\le -M_3^{\max}$ | $\overline{M}_2 - m_{CR_2}$ $\ge M_2^{\max}$ |

Le fait que les critères $\overline{CR}_1$, $\overline{CR}_2$ $\overline{CR}_3$ restent bornés indique que les quatre pneumatiques présentent un état de gonflage similaire et le fait que les critères $\overline{M}_2$ et $\overline{M}_3$ s'écartent de leur valeur nominal indique qu'au moins trois pneumatiques sont dégonflés. Par conséquent, cette situation correspond bien à un sous-gonflage simultané des quatre pneumatiques.

Grâce au procédé de diagnostic selon l'invention, il est ainsi obtenu les avantages suivants :

■ une amélioration de la fiabilité du diagnostic vis-à-vis de phénomènes dynamiques, induits notamment par une prise de virage du véhicule, au moyen du report des mesures des vitesses angulaires ;

■ une amélioration de la fiabilité du diagnostic grâce à la réécriture des critères $CR_1$ et $CR_2$. En effet, dans ces critères, il n'y pas de comparaison à une vitesse de référence $\omega_{ref}^2$ pour établir un diagnostic. On évite ainsi qu'un sous-gonflage des pneumatiques utilisés pour le calcul de la vitesse $\omega_{ref}^2$ n'induise une fausse alerte ;

■ un diagnostic possible de n'importe lequel des pneumatiques ainsi qu'un diagnositic plus fiable d'un double sous-gonflage des roues sur un côté du véhicule grâce à l'introduction d'un troisième critère $CR_3$ ;

■ une amélioration de la fiabilité du diagnostic vis-à-vis de phénomènes dynamiques, notamment les phénomènes de glissement, les variations des dérives, des raideurs et des résistances au roulement des pneumatiques grâce à l'utilisation de deux nouveaux critères $M_2$ et $M_3$ ; et

■ une amélioration de la fiabilité du diagnostic au moyen du calibrage, de préférence régulier, des offsets des critères utilisés lors du diagnostic.

Il a été décrit un mode de réalisation particulier de l'invention. Bien entendu d'autres modes de réalisation sont possibles.

Par exemple, il est possible d'utiliser le procédé mis en oeuvre dans l'état de la technique, par exemple celui de la demande FR 2 664 536, en remplaçant les mesures des vitesses angulaires par les vitesses angulaires reportées correspondantes.

## Revendications

**1.** Procédé de détection de l'état de gonflage d'au moins un des pneumatiques équipant des paires de roues avant (r1, r2) et arrière (r3, r4) d'un véhicule automobile (10), chacune de ces paires étant associée à un essieu du véhicule, du type comportant une mesure (en 22) des vitesses angulaires des roues (r1, r2, r3, r4) du véhicule (10) et une analyse (en 24-44) des vitesses mesurées pour détecter ledit état de gonflage, *caractérisé* **en ce que** l'analyse comporte le report (en 24) de chaque mesure de vitesse angulaire sur le milieu de l'essieu correspondant, et **en ce que** l'analyse porte (en 26-44) sur les mesures reportées pour détecter ledit état de gonflage.

**2.** Procédé selon la revendication 1, *caractérisé* **en ce que** le report (en 22) d'une mesure de vitesse angulaire sur le milieu de l'essieu correspondant est réalisé selon la relation :

$$\omega_{i\_c} = \omega_i \frac{\left|R_\psi\right|}{\sqrt{\left(R_\psi + E_i\right)^2 + L_i^2}}$$

où $\omega_i$, est la mesure de la vitesse angulaire, $R_\psi$ est le rayon de courbure de la rotation instantanée du centre de gravité du véhicule, et $E_i$ et $L_i$ sont respectivement la demi voie et l'empattement de l'essieu associé.

**3.** Procédé selon la revendication 2, ***caractérisé* en ce que** le report (en 22) de la mesure de vitesse angulaire comporte le calcul du rayon de courbure selon la relation :

$$R_\psi = \frac{L_1 + L_2}{\tan\alpha_1 - \tan\alpha_2}$$

où $L_1$ et $L_2$ sont les empattements des essieux des paires de roues avant et arrière respectivement, $\alpha_1$ est l'angle de braquage de la paire de roues avant, et $\alpha_2$ est l'angle de braquage de la paire de roues arrière.

**4.** Procédé selon la revendication 3, ***caractérisé* en ce que** l'angle de braquage de la paire de roues avant est piloté au moyen d'un volant de direction, et **en ce que** le report (en 22) de la mesure de la vitesse angulaire comporte une mesure de l'angle du volant de direction et le calcul de l'angle de braquage de la paire de roues avant en fonction de l'angle du volant de direction mesuré.

**5.** Procédé selon l'une quelconque des revendications précédentes, ***caractérisé* en ce que** l'analyse (en 26-44) des mesures de vitesse angulaire reportées comporte :

■ le calcul (en 26) d'au moins un critère $CR_j$ selon la relation :

$$CR_j = k_j \left( \frac{f_{1,1}^2 + f_{2,1}^2}{f_{1,2}^2 + f_{2,2}^2} - p_j \right)$$

où $p_j$ est un décalage prédéterminé, $k_j$ est un gain prédéterminés, $f_{1,1}$ et $f_{1,2}$ sont les inverses des mesures de vitesse angulaires reportées de deux roues parmi les quatre roues des paires de roues avant et arrière, et $f_{2,1}$ et $f_{2,2}$ sont les inverses des mesures de vitesse angulaire reportées des deux autres roues parmi les quatre roues des paires de roues avant et arrière ; et
■ la détection (en 44) dudit état de gonflage en fonction du au moins un critère calculé.

**6.** Procédé selon la revendication 5, ***caractérisé* en ce que** le ou chaque critère est moyenne pendant une durée prédéterminée.

**7.** Procédé selon la revendication 5 ou 6, ***caractérisé* en ce que** l'analyse (en 26-44) comporte une surveillance (en 30) de conditions prédéterminées de validité du ou chaque critère, le calcul (en 26) du critère étant déclenché ou invalidé lorsque lesdites conditions ne sont pas satisfaites.

**8.** Procédé selon la revendication 7, ***caractérisé* en ce que** les inverses $f_{1,1}$ et $f_{1,2}$ sont celles des roues de l'essieu avant et les inverses $f_{2,1}$ et $f_{2,2}$ sont celles des roues de l'essieu arrière, et **en ce que** les conditions de validité du critère comprennent au moins l'une des conditions suivantes :

■ le véhicule roule sensiblement en ligne droite ;
■ le couple moteur du véhicule est sensiblement stabilisé ;
■ il n'existe sensiblement pas de glissement des pneumatiques des roues motrices du véhicule ; et
■ un système de contrôle de trajectoire et un système d'anti-blocage des roues équipant le véhicule sont inactifs.

**9.** Procédé selon la revendication 7 ou 8, ***caractérisé* en ce que** les inverses $f_{1,1}$ et $f_{1,2}$ sont celles des roues sur un premier côté du véhicule et les inverses $f_{2,1}$ et $f_{2,2}$ sont celles des roues sur un second côté du véhicule, et **en ce que** les conditions de validité du critère comprennent au moins l'une des conditions suivantes :

■ le véhicule roule sensiblement en ligne droite ;
■ la trajectoire du véhicule est sensiblement stabilisée ;

■ il n'existe sensiblement pas de glissement des pneumatiques des roues motrices du véhicule ; et
■ un système de contrôle de trajectoire et un système d'anti-blocage des roues équipant le véhicule sont inactifs.

**10.** Procédé selon l'une quelconques des revendications 5 à 9, *caractérisé* **en ce que** l'analyse (en 26-44) des mesures de vitesse angulaire reportées comporte le calcul (en 26) d'un critère $M_2$ selon la relation :

$$M_2 = \tan\left(\frac{CR_j}{C_r}\right)$$

où $C_r$ est le couple transmis aux roues motrices, les inverses $f_{1,1}$ et $f_{1,2}$ sont celles des roues de l'essieu avant et les inverses $f_{2,1}$ et $f_{2,2}$ sont celles des roues de l'essieu arrière
ou **en ce que** l'analyse (en 26-44) des mesures de vitesse angulaire reportées comporte le calcul (en 26) d'un critère $M_3$ selon la relation :

$$M_3 = \tan\left(\frac{CR_j}{\alpha_{volant}}\right)$$

où $\alpha_{volant}$ est l'angle d'un volant de direction, les inverses $f_{1,1}$ et $f_{1,2}$ sont celles des roues sur un premier côté du véhicule et les inverses $f_{2,1}$ et $f_{2,2}$ sont celles des roues sur un second côté du véhicule.

**11.** Procédé selon la revendication 10, *caractérisé* **en ce que** le critère $M_2$ et/ou le critère $M_3$ sont utilisés (en 44) pour confirmer ou infirmer un diagnostic relatif à plusieurs états de gonflage non satisfaisants.

**12.** Procédé selon la revendication 10, *caractérisé* **en ce que** les critères $M_2$ et $M_3$ sont utilisés (en 44) pour diagnostiquer un état de gonflage non satisfaisant de l'ensemble des roues du véhicule.

**13.** Procédé selon l'une quelconques des revendications 5 à 12, *caractérisé* **en ce que** lors d'une situation de vie dans laquelle au moins des variations dynamiques des rayons de roulement des pneumatiques sont sensiblement nulles, on procède au calibrage (en 48) du décalage du ou de chaque critère de manière à annuler le critère ou une moyenne de durée prédéterminée de celui-ci.

**14.** Procédé selon la revendication 13, *caractérisé* **en ce que** le calibrage (en 48) du décalage est déclenché lorsqu'au moins les conditions suivantes sont satisfaites :

■ le véhicule roule sensiblement en ligne droite ;
■ la trajectoire du véhicule est sensiblement stabilisée ;
■ le couple moteur du véhicule est sensiblement stabilisé ;
■ il n'existe sensiblement pas de glissement des pneumatiques des roues motrices du véhicule ; et
■ un système de contrôle de trajectoire et un système d'anti-blocage des roues équipant le véhicule sont inactifs.

**15.** Système de détection de l'état de gonflage d'au moins un des pneumatiques équipant des paires de roues avant et arrière d'un véhicule automobile, chacune de ces paires étant associée à un essieu du véhicule, du type comportant des moyens de mesure des vitesses angulaires des roues du véhicule et des moyens d'analyse des vitesses mesurées pour détecter ledit état de gonflage, *caractérisé* **en ce que** les moyens d'analyse comportent des moyens de détermination du report de chaque mesure de vitesse angulaire sur le milieu de l'essieu correspondant, et des moyens de détection dudit état de gonflage en fonction des mesures de vitesse angulaire reportées.

## Claims

**1.** Method for detecting the state of inflation of at least one of the tyres fitted to pairs of front (r1, r2) and rear (r3, r4) wheels of a motor vehicle (10), each of these pairs being associated with an axle of the vehicle, of the type comprising a measurement (at 22) of the angular speeds of the wheels (r1, r2, r3, r4) of the vehicle (10) and an analysis (at 24-44) of the measured speeds so as to detect the said state of inflation, ***characterized* in that** the analysis comprises the referring (at 24) of each angular speed measurement to the middle of the corresponding axle, and **in that** the analysis pertains (at 26-44) to the referred measurements so as to detect the said state of inflation.

2. Method according to Claim 1, ***characterized* in that** the referring (at 22) of an angular speed measurement to the middle of the corresponding axle is carried out according to the relation:

$$\omega_{i\_c} = \omega_i \frac{\left| R_\psi \right|}{\sqrt{\left( R_\psi + E_i \right)^2 + L_i^2}}$$

where $\omega_i$ is the measurement of the angular speed, $R_\psi$ is the radius of curvature of the instantaneous rotation of the centre of gravity of the vehicle, and $E_i$ and $L_i$ are respectively the half track and the wheelbase of the associated axle.

3. Method according to Claim 2, ***characterized* in that** the referring (at 22) of the angular speed measurement comprises the calculation of the radius of curvature according to the relation:

$$R_\psi = \frac{L_1 + L_2}{\tan\alpha_1 - \tan\alpha_2}$$

where $L_1$ and $L_2$ are the wheelbases of the axles of the front and rear wheel pairs respectively, $\alpha_1$ is the angle of deflection of the front wheel pair, and $\alpha_2$ is the angle of deflection of the rear wheel pair.

4. Method according to Claim 3, ***characterized* in that** the angle of deflection of the front wheel pair is controlled by means of a steering wheel, and **in that** the referring (at 22) of the measurement of the angular speed comprises a measurement of the angle of the steering wheel and the calculation of the angle of deflection of the front wheel pair as a function of the measured steering wheel angle.

5. Method according to any one of the preceding claims, ***characterized* in that** the analysis (at 26-44) of the referred angular speed measurements comprises:

■ the calculation (at 26) of at least one criterion $CR_j$ according to the relation:

$$CR_j = k_j \left( \frac{f_{1,1}^2 + f_{2,1}^2}{f_{1,2}^2 + f_{2,2}^2} - p_j \right)$$

where $p_j$ is a predetermined shift, $k_j$ is a predetermined gain, $f_{1,1}$ and $f_{1,2}$ are the inverses of the referred angular speed measurements of two wheels out of the four wheels of the front and rear wheel pairs, and $f_{2,1}$ and $f_{2,2}$ are the inverses of the referred angular speed measurements of the other two wheels out of the four wheels of the front and rear wheel pairs; and
■ the detection (at 44) of the said state of inflation as a function of the at least one calculated criterion.

6. Method according to Claim 5, ***characterized* in that** the or each criterion is averaged for a predetermined duration.

7. Method according to Claim 5 or 6, ***characterized* in that** the analysis (at 26-44) comprises a monitoring (at 30) of predetermined conditions of validity of the or each criterion, the calculation (at 26) of the criterion being triggered or invalidated when the said conditions are not satisfied.

8. Method according to Claim 7, ***characterized* in that** the inverses $f_{1,1}$ and $f_{1,2}$ are those of the wheels of the front axle and the inverses $f_{2,1}$ and $f_{2,2}$ are those of the wheels of the rear axle, and **in that** the conditions of validity of the criterion comprise at least one of the following conditions:

■ the vehicle is running substantially in a straight line;
■ the engine torque of the vehicle is substantially stabilized;
■ there is substantially no slippage of the tyres of the driving wheels of the vehicle; and
■ a trajectory control system and an anti-lock system for the wheels fitted to the vehicle are inactive.

9.  Method according to Claim 7 or 8, ***characterized* in that** the inverses $f_{1,1}$ and $f_{1,2}$ are those of the wheels on a first side of the vehicle and the inverses $f_{2,1}$ and $f_{2,2}$ are those of the wheels on a second side of the vehicle, and **in that** the conditions of validity of the criterion comprise at least one of the following conditions:

■ the vehicle is running substantially in a straight line;
■ the trajectory of the vehicle is substantially stabilized;
■ there is substantially no slippage of the tyres of the driving wheels of the vehicle; and
■ a trajectory control system and an anti-lock system for the wheels fitted to the vehicle are inactive.

10. Method according to any one of Claims 5 to 9, ***characterized* in that** the analysis (at 26-44) of the referred angular speed measurements comprises the calculation (at 26) of a criterion $M_2$ according to the relation:

$$M_2 = \tan\left(\frac{CR_j}{C_r}\right)$$

where $C_r$ is the torque transmitted to the driving wheels, the inverses $f_{1,1}$ and $f_{1,2}$ are those of the wheels of the front axle and the inverses $f_{2,1}$ and $f_{2,2}$ are those of the wheels of the rear axle
or **in that** the analysis (at 26-44) of the referred angular speed measurements comprises the calculation (at 26) of a criterion $M_3$ according to the relation:

$$M_3 = \tan\left(\frac{CR_j}{\alpha_{stgwhl}}\right)$$

where $\alpha_{stgwh1}$ is the angle of a steering wheel, the inverses $f_{1,1}$ and $f_{1,2}$ are those of the wheels on a first side of the vehicle and the inverses $f_{2,1}$ and $f_{2,2}$ are those of the wheels on a second side of the vehicle.

11. Method according to Claim 10, ***characterized* in that** the criterion $M_2$ and/or the criterion $M_3$ are used (at 44) to confirm or deny a diagnosis relating to several unsatisfactory state of inflations.

12. Method according to Claim 10, ***characterized* in that** the criteria $M_2$ and $M_3$ are used (at 44) to diagnose an unsatisfactory state of inflation of the set of wheels of the vehicle.

13. Method according to any one of Claims 5 to 12, ***characterized* in that** during a life situation in which at least dynamic variations of the running radii of the tyres are substantially zero, the calibration (at 48) of the shift of the or of each criterion is undertaken so as to cancel the criterion or an average of predetermined duration of said criterion.

14. Method according to Claim 13, ***characterized* in that** the calibration (at 48) of the shift is triggered when at least the following conditions are satisfied:

■ the vehicle is running substantially in a straight line;
■ the trajectory of the vehicle is substantially stabilized;
■ the engine torque of the vehicle is substantially stabilized;
■ there is substantially no slippage of the tyres of the driving wheels of the vehicle; and
■ a trajectory control system and an anti-lock system for the wheels fitted to the vehicle are inactive.

**15.** System for detecting the state of inflation of at least one of the tyres fitted to front and rear wheel pairs of a motor vehicle, each of these pairs being associated with an axle of the vehicle, of the type comprising means for measuring the angular speeds of the wheels of the vehicle and means for analyzing the measured speeds so as to detect the said state of inflation, *characterized* in that the analysis means comprise means for determining the referring of each angular speed measurement to the middle of the corresponding axle, and means for detecting the said state of inflation as a function of the referred angular speed measurements.

**Patentansprüche**

**1.** Verfahren zur Erfassung des Füllzustands mindestens eines der Luftreifen, die Paare von Vorderrädern (r1, r2) und Hinterrädern (r3, r4) eines Kraftfahrzeugs (10) bestücken, wobei jedes dieser Paare einer Achse des Fahrzeugs zugeordnet ist, von der Art, die eine Messung (in 22) der Winkelgeschwindigkeiten der Räder (r1, r2, r3, r4) des Fahrzeugs (10) und eine Analyse (in 24-44) der gemessenen Geschwindigkeiten aufweist, um den Füllzustand zu erfassen, **dadurch gekennzeichnet, dass** die Analyse die Übertragung (in 24) jeder Winkelgeschwindigkeitsmessung auf die Mitte der entsprechenden Achse aufweist, und dass die Analyse (in 26-44) die übertragenen Messungen zur Erfassung des Füllzustands betrifft.

**2.** Verfahren nach Anspruch 1, **dadurch gekennzeichnet, dass** die Übertragung (in 22) einer Winkelgeschwindigkeitsmessung auf die Mitte der entsprechenden Achse gemäß der folgenden Beziehung durchgeführt wird:

$$\omega_{i\_c} = \omega_i \frac{\left| R_\psi \right|}{\sqrt{\left( R_\psi + E_i \right)^2 + L_i^2}}$$

wobei $\omega_i$ die Messung der Winkelgeschwindigkeit, $R_\psi$ der Krümmungsradius der Augenblicksdrehung des Schwerpunkts des Fahrzeugs, und $E_i$ und $L_i$ die halbe Spurweite bzw. der Radstand der zugeordneten Achse sind.

**3.** Verfahren nach Anspruch 2, **dadurch gekennzeichnet, dass** die Übertragung (in 22) der Winkelgeschwindigkeitsmessung die Berechnung des Krümmungsradius gemäß der folgenden Beziehung aufweist:

$$R_\psi = \frac{L_1 + L_2}{\tan\alpha_1 - \tan\alpha_2}$$

wobei $L_1$ und $L_2$ die Radstände der Achsen der vorderen bzw. hinteren Radpaare sind, $\alpha_1$ der Einschlagwinkel des vorderen Radpaars und $\alpha_2$ der Einschlagwinkel des hinteren Radpaars ist.

**4.** Verfahren nach Anspruch 3, **dadurch gekennzeichnet, dass** der Einschlagwinkel des vorderen Radpaars mittels eines Lenkrads gesteuert wird, und dass die Übertragung (in 22) der Winkelgeschwindigkeitsmessung eine Messung des Lenkradwinkels und die Berechnung des Einschlagwinkels des vorderen Radpaars abhängig vom gemessenen Lenkradwinkel aufweist.

**5.** Verfahren nach einem der vorhergehenden Ansprüche, **dadurch gekennzeichnet, dass** die Analyse (in 26-44) der übertragenen Winkelgeschwindigkeitsmessungen aufweist:

• die Berechnung (in 26) mindestens eines Kriteriums $CR_j$ gemäß der Beziehung:

$$CR_j = k_j \left( \frac{f_{1.1}^2 + f_{2.1}^2}{f_{1.2}^2 + f_{2.2}^2} - p_j \right)$$

wobei $p_j$ eine Vorbestimmte Verschiebung ist, $k_j$ eine Vorbestimmte Verstärkung ist, $f_{1 \cdot 1}$ und $f_{1 \cdot 2}$ die Kehrwerte der übertragenen Winkelgeschwindigkeitsmessungen von zwei Rädern unter den vier Rädern der vorderen und hinteren Radpaare sind, und $f_{2.1}$ und $f_{2.2}$ die Kehrwerte der übertragenen Winkelgeschwindigkeitsmessungen der zwei anderen Räder unter den vier Rädern der vorderen und hinteren Radpaare sind; und
• die Erfassung (in 44) des Füllzustands abhängig von dem mindestens einen berechneten Kriterium.

6.  Verfahren nach Anspruch 5, **dadurch gekennzeichnet, dass** das oder jedes Kriterium während einer Vorbestimmten Dauer gemittelt wird.

7.  Verfahren nach Anspruch 5 oder 6, **dadurch gekennzeichnet, dass** die Analyse (in 26-44) eine Überwachung (in 30) Vorbestimmter Gültigkeitsbedingungen des oder jedes Kriteriums aufweist, wobei die Berechnung (in 26) des Kriteriums ausgelöst oder verhindert wird, wenn die Bedingungen nicht erfüllt sind.

8.  Verfahren nach Anspruch 7, **dadurch gekennzeichnet, dass** die Kehrwerte $f_{1 \cdot 1}$ und $f_{1 \cdot 2}$ diejenigen der Räder der Vorderachse und die Kehrwerte $f_{2.1}$ und $f_{2.2}$ diejenigen der Räder der Hinterachse sind, und dass die Gültigkeitsbedingungen des Kriteriums mindestens eine der folgenden Bedingungen enthalten:

    • das Fahrzeug fährt im Wesentlichen geradeaus;
    • das Motordrehmoment des Fahrzeugs ist im Wesentlichen stabilisiert;
    • es gibt im Wesentlichen keinen Schlupf der Luftreifen der Antriebsräder des Fahrzeugs; und
    • ein elektronisches Stabilitätsprogramm und ein Antiblockiersystem der das Fahrzeug ausstattenden Räder sind inaktiv.

9.  Verfahren nach Anspruch 7 oder 8, **dadurch gekennzeichnet, dass** die Kehrwerte $f_{1.1}$ und $f_{1.2}$ diejenigen der Räder auf einer ersten Seite des Fahrzeugs und die Kehrwerte $f_{2.1}$ und $f_{2.2}$ diejenigen der Räder auf einer zweiten Seite des Fahrzeugs sind, und dass die Gültigkeitsbedingungen des Kriteriums mindestens eine der folgenden Bedingungen enthalten:

    • das Fahrzeug fährt im Wesentlichen geradeaus;
    • die Spur des Fahrzeugs ist im Wesentlichen stabilisiert;
    • es gibt im Wesentlichen keinen Schlupf der Luftreifen der Antriebsräder des Fahrzeugs; und
    • ein elektronisches Stabilitätsprogramm und ein Antiblockiersystem der das Fahrzeug ausstattenden Räder sind inaktiv.

10. Verfahren nach einem der Ansprüche 5 bis 9, **dadurch gekennzeichnet, dass** die Analyse (in 26-44) der übertragenen Winkelgeschwindigkeitsmessungen die Berechnung (in 26) eines Kriteriums $M_2$ gemäß der folgenden Beziehung aufweist:

$$M_2 \;=\; \tan\!\left( \frac{CR_j}{C_r} \right)$$

wobei $C_r$ das auf die Antriebsräder übertragene Drehmoment ist, die Kehrwerte $f_{1.1}$ und $f_{1.2}$ diejenigen der Räder der Vorderachse und die Kehrwerte $f_{2.1}$ und $f_{2.2}$ diejenigen der Räder der Hinterachse sind,
oder dass die Analyse (in 26-44) der übertragenen Winkelgeschwindigkeitsmessungen die Berechnung (in 26) eines Kriteriums $M_3$ gemäß der folgenden Beziehung aufweist:

$$M_3 \;=\; \tan\!\left( \frac{CR_j}{\alpha_{Lenkrad}} \right)$$

wobei $\alpha_{Lenkrad}$ der Winkel eines Lenkrads ist, die Kehrwerte $f_{1.1}$ und $f_{1.2}$ diejenigen der Räder auf einer ersten Seite des Fahrzeugs und die Kehrwerte $f_{2.1}$ und $f_{2.2}$ diejenigen auf einer zweiten Seite des Fahrzeugs sind.

**11.** Verfahren nach Anspruch 10, **dadurch gekennzeichnet, dass** das Kriterium $M_2$ und/oder das Kriterium $M_3$ verwendet werden (in 44), um eine Diagnose bezüglich mehrerer nicht zufriedenstellender Füllstände zu bestätigen oder zu entkräften.

**12.** Verfahren nach Anspruch 10, **dadurch gekennzeichnet, dass** die Kriterien $M_2$ und $M_3$ verwendet werden (in 44), um einen nicht zufriedenstellenden Füllstand der Gesamtheit der Räder des Fahrzeugs zu diagnostizieren.

**13.** Verfahren nach einem der Ansprüche 5 bis 12, **dadurch gekennzeichnet, dass** in einer Lebenslage, in der mindestens dynamische Änderungen der Rollradien der Luftreifen im Wesentlichen Null sind, die Kalibrierung (in 48) der Verschiebung des oder jedes Kriteriums durchgeführt wird, um das Kriterium oder einen Mittelwert Vorbestimmter Dauer von diesem zu annullieren.

**14.** Verfahren nach Anspruch 13, **dadurch gekennzeichnet, dass** die Kalibrierung (in 48) der Verschiebung ausgelöst wird, wenn mindestens die folgenden Bedingungen erfüllt sind:

• das Fahrzeug fährt im Wesentlichen geradeaus;
• die Spur des Fahrzeugs ist im Wesentlichen stabilisiert;
• das Motordrehmoment des Fahrzeugs ist im Wesentlichen stabilisiert;
• es gibt im Wesentlichen keinen Schlupf der Luftreifen der Antriebsräder des Fahrzeugs; und
• ein elektronisches Stabilitätsprogramm und ein Antiblockiersystem der das Fahrzeug ausstattenden Räder sind inaktiv.

**15.** System zur Erfassung des Füllzustands von mindestens eines der Paare von Vorder- und Hinterrädern eines Kraftfahrzeugs ausstattenden Luftreifen, wobei jedes dieser Paare einer Achse des Fahrzeugs zugeordnet ist, von der Art, die Einrichtungen zur Messung der Winkelgeschwindigkeiten der Räder des Fahrzeugs und Einrichtungen zur Analyse der gemessenen Geschwindigkeiten aufweist, um den Füllzustand zu erfassen, **dadurch gekennzeichnet, dass** die Analyseeinrichtungen Einrichtungen zur Bestimmung der Übertragung jeder Winkelgeschwindigkeitsmessung auf die Mitte der entsprechenden Achse und Einrichtungen zur Erfassung des Füllzustands abhängig von den übertragenen Winkelgeschwindigkeitsmessungen aufweisen.

Fig. 1

**Fig. 2**

Fig. 3

Fig. 4

**EP 2 085 256 B1**

**Documents brevets cités dans la description**

- DE 19802498 A1
- FR 2568519
- EP 291217 A
- FR 2664536